(19) **Europäisches Patentamt / European Patent Office / Office européen des brevets**

(11) **EP 4 576 558 B1**

(12) # EUROPEAN PATENT SPECIFICATION

(45) Date of publication and mention
of the grant of the patent:
**15.07.2026 Bulletin 2026/29**

(21) Application number: **23307299.0**

(22) Date of filing: **21.12.2023**

(51) International Patent Classification (IPC):
$H02P\ 21/00^{(2016.01)}$ $\quad H02P\ 23/00^{(2016.01)}$

(52) Cooperative Patent Classification (CPC):
**H02P 21/0085; H02P 23/0086**

(54) **METHOD OF DETERMINING A MAXIMUM OPERATING SPEED OF AN ELECTRIC MOTOR**

VERFAHREN ZUR BESTIMMUNG EINER MAXIMALEN BETRIEBSGESCHWINDIGKEIT EINES ELEKTROMOTORS

PROCÉDÉ DE DÉTERMINATION D'UNE VITESSE DE FONCTIONNEMENT MAXIMALE D'UN MOTEUR ÉLECTRIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**25.06.2025 Bulletin 2025/26**

(73) Proprietor: **Schneider Toshiba Inverter Europe
SAS
27120 Pacy-sur-Eure (FR)**

(72) Inventors:
- **GHILEB, Haïthem
27200 VERNON (FR)**
- **JEBAI, Al Kassem
27200 VERNON (FR)**
- **FRAPPÉ, Emmanuel
92100 BOULOGNE (FR)**

(74) Representative: **Plasseraud IP
104 Rue de Richelieu
CS92104
75080 Paris Cedex 02 (FR)**

(56) References cited:
**US-B2- 9 768 719**

- SIEMENS A G: "Drive- Based Technology", 1 November 2011 (2011-11-01), XP093170929, Retrieved from the Internet <URL:https://cache.industry.siemens.com/dl/files/467/47205467/att_101692/v1/SIMOCRANE_Drive-Based_2010-11_en_en-US.pdf> [retrieved on 20240605]
- JANNE SALOMAKI ET AL: "Field-weakening method for v/f -controlled hoist drive", ELECTRIC MACHINES&DRIVES CONFERENCE (IEMDC), 2011 IEEE INTERNATIONAL, IEEE, 15 May 2011 (2011-05-15), pages 1253 - 1258, XP032049398, ISBN: 978-1-4577-0060-6, DOI: 10.1109/IEMDC.2011.5994783

**EP 4 576 558 B1**

**Description**

**Technical Field**

The present disclosure relates to a method of determining a maximum operating speed of an electric motor subjected to a defined torque at a speed higher than the rated speed of the motor. More particularly, the present disclosure relates to the field of high-speed hoisting.

**Prior Art**

Mechanical and electro-mechanical lifting equipment, including cranes and hoisting gear, must be able to lift loads at high speeds. This feature is particularly important in scenarios where time efficiency and rapid movement of materials are critical, such as in industrial environments or on construction sites. Traditional high-speed lifting systems rely heavily on electric motors to generate the power required for the lifting process. The performance of these motors, particularly their output at different speeds, plays a central role in the overall efficiency of the lifting system.

A motor manufacturer will normally provide information on the rated power and rated speed of the motor. This information is usually given on the motor nameplate.

Rated speed is the speed at which the motor or equipment is designed to operate optimally and efficiently under a standard load. Rated speed reflects the speed at which the equipment achieves its intended performance, particularly in terms of efficiency and durability. Rated power, on the other hand, is the maximum power that the motor or equipment can deliver continuously during normal operation without risk of damage or reduced life.

Conventional systems assume that the motor can consistently deliver its rated power regardless of speed. In practice, however, the motor may not be able to maintain its rated power beyond the rated speed. As a result, the actual speed of a motor under load does not match the speed calculated with such an assumption, see for example, Siemens AG: "Drive- Based Technology", 1 November 2011 (2011-11-01), XP093170929, https://cache.industry.siemens.com/ dl/files/467/47205467/att_.101692/v1/SIMOCRANE_Drive-Based_2010-11_en_en-US.pdf.

It is therefore necessary to be able to accurately determine the maximum speed that can be reached when the motor is subjected to a defined load, i.e., a defined torque, even at high operating speeds, i.e., in particular when the motor speed is higher than its rated speed.

To that aim, the present disclosure concerns method of determining a maximum operating speed of an electric motor subjected to a defined torque, at a speed higher than the rated speed of the motor, comprising:

- operating the motor at its maximum speed, for different torque values, and determining, for each torque value, the corresponding maximum motor speed, to obtain a set of actual measurement points representing the evolution of the maximum motor speed as a function of the torque applied to the motor,

  - selecting a coefficient *COF* between 0 and 1, for example depending on the motor characteristics,

  - determining a first curve representing the evolution of the maximum speed $\Omega_{ref}$ as a function of the measured torque $T_{meas}$ corresponding to the actual measurement points, for low maximum speeds, said first curve being defined by $\Omega_{ref} = \frac{COF*P_{nom}}{T_{meas}}$ , where $\Omega_{ref}$ is the maximum speed, $P_{nom}$ is the rated power and $T_{meas}$ is the measured torque of the motor,

  - defining a limit torque $T_{lim}$ corresponding to the torque at the intersection of the first curve with the set of measurement points,

  - determining a second curve representing the evolution of the maximum speed $\Omega_{ref}$ as a function of the measured torque $T_{meas}$, measured torques $T_{meas}$ lower than $T_{lim}$ said second curve being defined by $\Omega_{ref} = \frac{COF*P_{nom}}{f(T_{meas})}$ where *f* is a polynomial function, said function *f* being determined from the measurement points,

  - determining, from a defined torque *T*, the corresponding maximum motor speed, from the equation of the first curve if $T \geq T_{lim}$ from the equation of the second curve if $T \leq T_{lim}$.

The maximum operating speed of an electric motor refers to the highest speed at which the motor can operate safely and effectively under specific conditions, including different loads or torques. Unlike the rated speed, which is the optimum speed of the motor under standard load conditions, the maximum operating speed can vary depending on factors such as the applied load, motor design and operating conditions. In practical applications, particularly in scenarios such as high speed hoisting, this speed is critical as it determines the ability of the motor to handle higher than normal speeds and loads, directly affecting the efficiency and effectiveness of the performance in demanding situations.

The defined torque of an electric motor refers to a specific amount or value of rotational force that the motor is expected to produce or handle under certain conditions. Torque is a characteristic of motor performance that refers to the force a motor can apply to rotate an object or system.

The relationship between torque, speed, and power can be expressed by the formula: *Power = Torque * Speed*. The classic unit for torque is the Newton-meter (Nm). The speed is typically measured in revolutions per minute (RPM). The classic unit for power is watts (W). The formula to calculate power in an electric motor, considering these units:

$$Power\ (W) = Torque\ (Nm) \times Speed\ (RPM) \times \frac{2\pi}{60}$$ . The factor $\frac{2\pi}{60}$ is used to convert the rotational speed from RPM to radians per second, which aligns the units for calculating power in watts.

In the above-mentioned formula $\Omega_{ref} = \frac{COF * P_{nom}}{T_{meas}}$, the speed $\Omega_{ref}$ is expressed in radians per seconds (rad/s), the power $P_{nom}$ is expressed in watts (W) and the torque $T_{meas}$ is expressed in Newton-meters (Nm).

The actual measurement points refer to specific data points collected from real-world testing or operation of an electric motor. Said actual measurement points illustrate how the maximum speed of the motor changes in response to different levels of applied torque. These measurement points are gathered by subjecting the motor to varying torque conditions and observing the corresponding speeds attained. This data is useful for understanding the performance characteristics, especially its ability to maintain or reach certain speeds under varying loads. The relationship between torque and speed, as captured by these measurements, helps in constructing a detailed and practical performance profile of the motor, which may be used for designing efficient and reliable motor-driven systems, particularly in applications where precise control of speed and torque is required.

The motor characteristics refer to the specific properties and performance parameters of an electric motor that define its operational capabilities and efficiency. These characteristics may include the rated power and speed of the motor, torque-speed curve, efficiency, power factor, starting torque, and thermal limits, among others. They determine how the motor behaves under various load conditions, its power consumption, and overall suitability for specific applications. Motor characteristics may be provided by the manufacturer of the motor.

The determination of the first curve may take into account the actual measurement points for low maximum speed, i.e. for a maximum speed $\Omega_{ref}$ that is below a defined value.

Once the first curve is determined, a limit torque $T_{lim}$ corresponding to the torque at the intersection of the first curve with the set of measurement points is defined.

This can be achieved, for example, by interpolating or regressing the measurement points to obtain a curve, called describing curve, describing the evolution of the actual measurement points and by determining the intersection of the first curve and the describing curve.

Interpolation involves creating a curve or a function that passes exactly through all the given data points. It assumes the data is sufficiently accurate and seeks to produce values that are consistent with the given set.

Such interpolation may be linear or polynomial, for example. Linear interpolation is the simplest form of interpolation and involves drawing a straight line between two known data points and using this line to estimate the values between these points. Polynomial interpolation is a more complex method where a polynomial (degree 2 or higher) is fitted to the data, enabling better estimation in cases where the relationship between the points is not linear.

In regression analysis, the fitted line or curve represents the best estimate of the relationship between the variables, minimizing the overall error or distance between the data points and the line or curve. Regression may be linear or polynomial, for example.

Alternatively, the intersection can be estimated from the sole measurement points, without determining a describing curve fitting these points, for example by choosing one of the actual measurement points as the intersection point. This implies an approximation, which is acceptable in the present process.

Said function *f* may be a polynomial function, for example a first order polynomial function or a second order polynomial function.

Said function *f* may be a function defining a Bézier curve.

A function defining a Bézier curve is a mathematical representation used to model smooth curves that can be scaled and manipulated easily. The basic idea behind a Bézier curve is to use a set of control points to define the curve's shape. The function uses these control points to create a parametric curve that is smooth and continuous. The function for a Bézier curve is a polynomial function, where the degree of the polynomial is one less than the number of control points. For instance, a cubic Bézier curve has a third-degree polynomial.

In a Bézier curve, the curve itself does not usually pass through the intermediate control points. These points act more like magnets pulling the curve in certain directions, thereby shaping it.

Said method may further comprises:

- determining an initial torque $T_0$ from which the maximum speed $\Omega_{ref}$ of the motor decreases, said maximum speed being constant when the torque applied to the motor is less than said initial torque,
- defining the maximum motor speed $\Omega_{ref}$ subjected to said defined torque being equal to a constant maximum value $\Omega_{max}$ if said defined torque $T \leq T_0$.

In other words, for a defined torque T, the corresponding maximum speed can be determined by the following equations:

-

$$\Omega = \frac{COF*P_{nom}}{T} \text{ if } T \geq T_{lim}$$

-

$$\Omega = \frac{COF*P_{nom}}{a*T+b} \text{ if } T_0 \leq T \leq T_{lim}$$

with the above-mentioned function $f$ (first order polynomial function),

-

$$\Omega = \Omega_{max} \text{ if } T \leq T_0.$$

In any cases, $\Omega$ may be bounded by (i.e. may not exceed) $\Omega_{max}$.

The present disclosure also concerns a computer program comprising instructions for implementing the above-mentioned method when this program is executed by a processor.

The present disclosure also concerns a non-transitory computer-readable recording medium on which is recorded a program for implementing the above-mentioned method, when this program is executed by a processor.

**Brief description of the drawings**

Further features, details and advantages will become apparent from the detailed description below, and from an analysis of the appended drawings, in which:

- Figure 1 schematically illustrates a lifting device comprising an electric motor subjected to a load,

- Figure 2 schematically illustrates the various stages of the process described herein,

- Figure 3 is a diagram showing the evolution of the maximum speed of an electric motor as a function of the torque to which the motor is subjected.

**Description of embodiments**

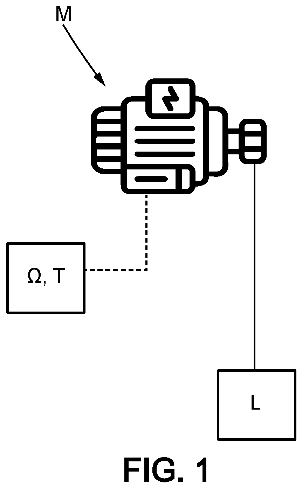

Figure 1 shows a lifting device for a crane, for example, comprising a load-bearing electric motor. The motor comprises a stator and a rotor coupled to a shaft, the rotation of the shaft moving the load. The speed at which the load is moved is linked to the speed of rotation of the motor shaft, also known as the motor speed. Thus, during operation, the motor is subjected to a torque whose value depends on the load to be moved.

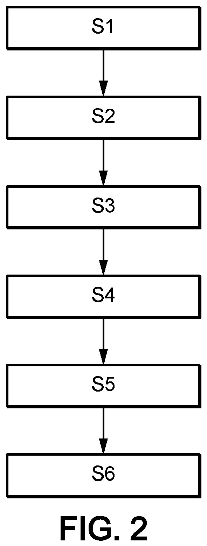

Figure 2 schematically illustrates a method of determining a maximum operating speed of an electric motor subjected to a defined torque, at a speed higher than the rated speed of the motor.

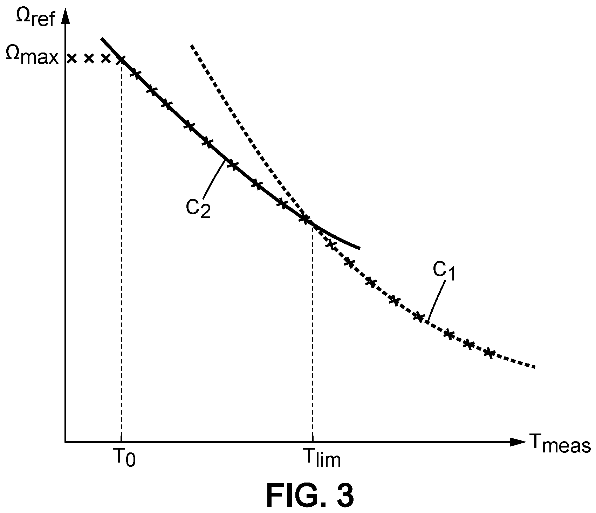

Figure 3 illustrate the evolution of the maximum speed of a motor as a function of the torque applied to the motor. More particularly, the evolution is represented by a series of measurement points gathered from experiments conducted on a lifting device or a test bench, both incorporating a motor to which a load has been applied. This figure provides a detailed view of how the maximum speed of the motor varies in response to different levels of torque.

This variation in maximum speed reveals three distinct zones, a first zone ($T_{meas} \leq T_0$) where maximum speed is essentially constant and equal to $\Omega_{max}$, a second zone ($T_0 \leq T_{meas} \leq T_{lim}$) where speed decreases with torque, and a third zone ($T_{meas} \geq T_{lim}$) where speed also decreases with torque, but more rapidly than in the second zone.

In the proposed method, the motor is operated at its maximum speed (S1 in figure 3), for different torque values (i.e., with different loads), and, for each torque value, the corresponding maximum motor speed is determined, to obtain a set of real measurement points representing the evolution of the maximum motor speed as a function of the torque applied to the motor.

To that aim, the load may be progressively increased or decreased, per increment for example. The torque applied to the motor and the maximum speed may be measured or determined directly or indirectly, for example by calculation from another measurement.

Then a coefficient COF between 0 and 1 selected, for example depending on the motor characteristics (S2).

A first curve $C_1$ representing the evolution of the maximum speed $\Omega_{ref}$ as a function of the measured torque $T_{meas}$ corresponding to the actual measurement points, may then be determined for low maximum speeds (S3). Said first curve may be defined by $\Omega_{ref} = \frac{COF * P_{nom}}{T_{meas}}$ , where $\Omega_{ref}$ is the maximum speed, $P_{nom}$ is the rated power and $T_{meas}$ is the measured torque of the motor.

A limit torque $T_{lim}$ corresponding to the torque at the intersection of the first curve with the set of measurement points may then be determined (S4).

Then, a second curve $C_2$ may be determined (S5), said second curve representing the evolution of the maximum speed $\Omega_{ref}$ as a function of the measured torque $T_{meas}$, the actual measurement points, for measured torques $T_{meas}$ comprised between $T_0$ than $T_{lim}$ said second curve being defined by $\Omega_{ref} = \frac{COF * P_{nom}}{f(T_{meas})}$ where is a polynomial function, said function $f$ being determined from the measurement points.

Said function $f$ is a polynomial function, for example a first order polynomial function.

In such case, the equation $\Omega_{ref} = \frac{COF * P_{nom}}{f(T_{meas})}$ can be read $\Omega_{ref} = \frac{COF * P_{nom}}{(a * T_{meas} + b)}$ , where $a$ and $b$ are scalars. In this case, in order to determine the second curve, it is first necessary to determine the values of the scalars $a$ and $b$.

For this purpose, one option may be to solve a system of two equations with two unknowns by choosing two measurement points defined by the coordinates $(\Omega_{ref1}; T_{meas1})$ and $(\Omega_{ref2}; T_{meas2})$, the equations can then be defined as follows:

$$(Equation\ 1): \Omega_{ref1} = \frac{COF * P_{nom}}{(a * T_{meas1} + b)}$$

$$(Equation\ 2): \Omega_{ref2} = \frac{COF * P_{nom}}{(a * T_{meas2} + b)}$$

The values $\Omega_{ref1}$, $T_{meas1}$, $\Omega_{ref2}$, $T_{meas2}$, $COF$ et $P_{nom}$ being known, $a$ and $b$ can be determined.

Alternatively, $a$ and $b$ can be determined by the following equations:

$$\begin{cases} \mu = \min\left(\max\left(\frac{COF * FRS}{\Omega_{max} * (T_{lim} - T_0)} - \frac{T_0}{T_{lim} - T_0}, 0\right), 1\right) \\ a = (1 - \mu) \\ b = \mu * T_{lim} \end{cases}$$

where FRS is the rated frequency of the motor. The rated frequency of a motor refers to the specific frequency at which the motor is designed to operate most efficiently and effectively. This frequency is typically specified by the manufacturer (for example on the motor nameplate) and is closely tied to the electrical power supply standards of the region where the motor is intended to be used.

Then, the corresponding maximum motor speed may be determined (S6), from a defined torque $T$, from the equation of the first curve if $T \geq T_{lim}$ and from the equation of the second curve if $T_0 \leq T \leq T_{lim}$.

In other words, for a defined torque T, the corresponding maximum speed can be determined by the following equations:

-

$$\Omega = \frac{COF * P_{nom}}{T} \text{ if } T \geq T_{lim}$$

-

$$\Omega = \frac{COF * P_{nom}}{a*T+b} \text{ if } T_0 \leq T \leq T_{lim}$$

with the above-mentioned function $f$ (first order polynomial function),

-

$$\Omega = \Omega_{max} \text{ if } T \leq T_0.$$

## Claims

1. Method of determining a maximum operating speed of an electric motor (M) subjected to a defined torque, at a speed higher than the rated speed of the motor (M), comprising:

    - operating (S1) the motor at its maximum speed, for different torque values, and determining, for each torque value, the corresponding maximum motor speed, to obtain a set of real measurement points representing the evolution of the maximum motor speed as a function of the torque applied to the motor,
    - selecting (S2) a coefficient $COF$ between 0 and 1, for example depending on the motor characteristics,
    - determining (S3) a first curve representing the evolution of the maximum speed $\Omega_{ref}$ as a function of the measured torque $T_{meas}$ corresponding to the actual measurement points, for low maximum speeds, said first curve being defined by $\Omega_{ref} = \frac{COF * P_{nom}}{T_{meas}}$, where $\Omega_{ref}$ is the maximum speed, $P_{nom}$ is the rated power and $T_{meas}$ is the measured torque of the motor, **characterised by**
    - defining (S4) a limit torque $T_{lim}$ corresponding to the torque at the intersection of the first curve with the set of measurement points,
    - determining (S5) a second curve representing the evolution of the maximum speed $\Omega_{ref}$ as a function of the measured torque $T_{meas}$, corresponding to the actual measurement points, for measured torques $T_{meas}$ lower than $T_{lim}$ said first curve being defined by $\Omega_{ref} = \frac{COF * P_{nom}}{f(T_{meas})}$ where f is a polynomial function, said function $f$ being determined from the measurement points,
    - determining (S6), from a defined torque $T$, the corresponding maximum motor speed, from the equation of the first curve if $T \geq T_{lim}$ and from the equation of the second curve if $T \leq T_{lim}$.

2. Method according to the preceding claim, wherein said function $f$ is a polynomial function.

3. Method according to the preceding claim, wherein said function $f$ is a function defining a Bézier curve.

4. Method according to one of the preceding claims, wherein said method further comprises:

    - determining an initial torque $T_0$ from which the maximum speed $\Omega_{ref}$ of the motor decreases, said maximum speed being constant when the torque applied to the motor is less than said initial torque,
    - defining the maximum motor speed $\Omega_{ref}$ subjected to said defined torque being equal to a constant maximum value $\Omega_{max}$ if said defined torque $T \leq T_0$.

5. Computer program comprising instructions for implementing the method according to one of preceding claims when this program is executed by a processor.

6. A non-transitory computer-readable recording medium on which is recorded a program for implementing the method according to one of claims 1 to 4 when this program is executed by a processor.

## Patentansprüche

1. Verfahren zum Bestimmen einer maximalen Betriebsdrehzahl eines Elektromotors (M), welcher einem definierten Drehmoment ausgesetzt ist, bei einer Drehzahl, welche höher ist als die Nenndrehzahl des Motors (M), umfassend:

    - Betreiben (S1) des Motors bei seiner maximalen Drehzahl für verschiedene Drehmomentwerte und Bestimmen der entsprechenden maximalen Motordrehzahl für jeden Drehmomentwert, um einen Satz von realen Messpunkten zu erhalten, welche den Verlauf der maximalen Motordrehzahl als eine Funktion des an dem Motor anliegenden Drehmoments darstellen,

- Auswählen (S2) eines Koeffizienten *COF* zwischen 0 und 1, beispielsweise in Abhängigkeit der Motoreigenschaften,

- Bestimmen (S3) einer ersten Kurve, welche den Verlauf der maximalen Drehzahl $\Omega_{ref}$ als eine Funktion des gemessenen Drehmoments $T_{meas}$ darstellt, entsprechend den tatsächlichen Messpunkten, für niedrige maximale Drehzahlen, wobei die erste Kurve definiert ist durch $\Omega_{ref} = \frac{COF*P_{nom}}{T_{meas}}$, wobei $\Omega_{ref}$ die maximale Drehzahl ist, $P_{nom}$ die Nennleistung ist und $T_{meas}$ das gemessene Drehmoment des Motors ist, **gekennzeichnet durch**

- Definieren (S4) eines Grenzdrehmoments $T_{lim}$, welches dem Drehmoment an dem Schnittpunkt der ersten Kurve mit dem Satz von Messpunkten entspricht,

- Bestimmen (S5) einer zweiten Kurve, welche den Verlauf der maximalen Drehzahl $\Omega_{ref}$ als eine Funktion des gemessenen Drehmoments $T_{meas}$ darstellt, entsprechend den tatsächlichen Messpunkten, für gemessene Drehmomente $T_{meas}$, welche niedriger sind als $T_{lim}$, wobei die erste Kurve definiert ist durch $\Omega_{ref} = \frac{COF*P_{nom}}{f(T_{meas})}$, wobei *f* eine Polynomfunktion ist, wobei die Funktion *f* aus den Messpunkten bestimmt wird,

- Bestimmen (S6) der entsprechenden maximalen Motordrehzahl aus einem definierten Drehmoment *T* aus der Gleichung der ersten Kurve, wenn $T \geq T_{lim}$, und aus der Gleichung der zweiten Kurve, wenn $T \leq T_{lim}$.

2. Verfahren nach dem vorhergehenden Anspruch, wobei die Funktion *f* eine Polynomfunktion ist.

3. Verfahren nach dem vorhergehenden Anspruch, wobei die Funktion *f* eine Funktion ist, welche eine Bézierkurve definiert.

4. Verfahren nach einem der vorhergehenden Ansprüche, wobei das Verfahren ferner umfasst:

- Bestimmen eines Anfangsdrehmoments $T_0$, ab welchem die maximale Drehzahl $\Omega_{ref}$ des Motors abnimmt, wobei die maximale Drehzahl konstant ist, wenn das an dem Motor anliegende Drehmoment geringer ist als das Anfangsdrehmoment,

- Definieren der maximalen Motordrehzahl $\Omega_{ref}$, welche dem definierten Drehmoment ausgesetzt ist, als gleich einem konstanten Maximalwert $\Omega_{max}$, wenn das definierte Drehmoment $T \leq T_0$ ist.

5. Computerprogramm, umfassend Anweisungen zum Implementieren des Verfahrens nach einem der vorhergehenden Ansprüche, wenn dieses Programm durch einen Prozessor ausgeführt wird.

6. Nichtflüchtiges computerlesbares Aufzeichnungsmedium, auf welchem ein Programm zum Implementieren des Verfahrens nach einem der Ansprüche 1 bis 4 aufgezeichnet ist, wenn dieses Programm durch einen Prozessor ausgeführt wird.

**Revendications**

1. Procédé de détermination d'une vitesse maximale de fonctionnement d'un moteur électrique (M) soumis à un couple défini, à une vitesse supérieure à la vitesse nominale du moteur (M), comprenant :

- l'actionnement (S1) du moteur à sa vitesse maximale, pour différentes valeurs de couple, et la détermination, pour chaque valeur de couple, de la vitesse moteur maximale correspondante, pour obtenir un ensemble de points de mesure réels représentant l'évolution de la vitesse moteur maximale en fonction du couple appliqué au moteur,

- la sélection (S2) d'un coefficient *COF* compris entre 0 et 1, par exemple selon des caractéristiques moteur,

- la détermination (S3) d'une première courbe représentant l'évolution de la vitesse maximale $\Omega_{ref}$ en fonction du couple mesuré $T_{meas}$ correspondant aux points de mesure effectifs, pour de faibles vitesses maximales, ladite première courbe étant définie par $\Omega_{ref} = \frac{COF*P_{nom}}{T_{meas}}$, où $\Omega_{ref}$ est la vitesse maximale, $P_{nom}$ est la puissance nominale et $T_{meas}$ est le couple mesuré du moteur, **caractérisé par**

- la définition (S4) d'un couple limite $T_{lim}$ correspondant au couple à l'intersection de la première courbe avec l'ensemble de points de mesure,
- la détermination (S5) d'une seconde courbe représentant l'évolution de la vitesse maximale $\Omega_{ref}$ en fonction du couple mesuré $T_{meas}$, correspondant aux points de mesure effectifs, pour des couples mesurés $T_{meas}$ inférieurs à $T_{lim}$, ladite première courbe étant définie par $\Omega_{ref} = \dfrac{COF * P_{nom}}{f(T_{meas})}$ où f est une fonction polynomiale, ladite fonction $f$ étant déterminée à partir des points de mesure,
- la détermination (S6), à partir d'un couple défini $T$, la vitesse moteur maximale correspondante, à partir de l'équation de la première courbe si $T \geq T_{lim}$ et à partir de l'équation de la seconde courbe si $T \leq T_{lim}$.

2. Procédé selon la revendication précédente, dans lequel ladite fonction f est une fonction polynomiale.

3. Procédé selon la revendication précédente, dans lequel ladite fonction f est une fonction définissant une courbe de Bézier.

4. Procédé selon l'une quelconque des revendications précédentes, dans lequel ledit procédé comprend en outre :

- la détermination d'un couple initial $T_0$ à partir duquel la vitesse maximale $\Omega_{ref}$ du moteur diminue, ladite vitesse maximale étant constante lorsque le couple appliqué au moteur est inférieur audit couple initial,
- la définition de la vitesse moteur maximale $\Omega_{ref}$ soumise audit couple défini qui est égale à une valeur maximale constante $\Omega_{max}$ si ledit couple défini $T \leq T_0$.

5. Programme d'ordinateur comprenant des instructions pour mettre en œuvre le procédé selon l'une des revendications précédentes lorsque ce programme est exécuté par un processeur.

6. Support d'enregistrement non transitoire lisible par ordinateur sur lequel est enregistré un programme pour mettre en œuvre le procédé selon l'une des revendications 1 à 4 lorsque ce programme est exécuté par un processeur.

M

Ω, T

L

# FIG. 1

FIG. 2

**FIG. 3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SIEMENS AG**. *Drive- Based Technology*, 01 November 2011, https://cache.industry.siemens.com/dl/files/467/47205467/att_.101692/v1/SIMOCRANE_Drive-Based_2010-11_en_en-US.pdf